# EUROPÄISCHE PATENTSCHRIFT

(11) **EP 1 776 785 B1**
(45) Veröffentlichungstag und Bekanntmachung des Hinweises auf die Patenterteilung: **15.10.2008**
(21) Anmeldenummer: 05768295.7
(22) Anmeldetag: 23.07.2005
(51) Int. Cl.: H04B 10/12, G02F 1/00

(54) **VORRICHTUNG ZUR ERZEUGUNG UND MODULATION EINES HOCHFREQUENTEN SIGNALS**
DEVICE FOR PRODUCING AND MODULATING A HIGH FREQUENCY SIGNAL
DISPOSITIF POUR GENERER ET MODULER UN SIGNAL HAUTE FREQUENCE

(30) Priorität: 03.08.2004 DE 102004037549
(43) Veröffentlichungstag der Anmeldung: 25.04.2007
(73) Patentinhaber: Deutsche Telekom AG, 53113 Bonn (DE)
(72) Erfinder: SCHNEIDER, Thomas, 14557 Wilhelmshorst (DE)
(86) Internationale Anmeldenummer: PCT/DE2005/001302
(87) Internationale Veröffentlichungsnummer: WO 2006/012849

(56) Entgegenhaltungen:
- EP-A- 1 246 323
- YOUNG-KWANG SEO ET AL: "OPTICAL MILLIMETER-WAVE GENERATION BY LOCKING OF FOUR-WAVE-MIXING CONJUGATE MODES IN DFB LASERS" LEOS 2000. 13TH. ANNUAL MEETING OF THE IEEE ELCTRO-OPTICS SOCIETY. RIO GRANDE, PR, NOV. 13-14, 2000, ANNUAL MEETING OF THE IEEE LASERS AND ELECTRO-OPTICS SOCIETY, NEW YORK, NY : IEEE, US, Bd. VOL. 1 OF 2, 2000, Seiten 78-79vol1, XP002288852 ISBN: 0-7803-5948-8
- M. HYODO, M. WATANABE: "Optical Generation of Millimeter Wave Signals up to 330 GHZ by means of cascadingly phase locking three semiconductor lasers" IEEE PHOTONICS TECHNOLOGY LETTERS, Bd. 15, Nr. 3, März 2003 (2003-03), Seiten 458-460, XP002351811

## Beschreibung

Die Erfindung betrifft eine Vorrichtung nach dem Oberbegriff des Anspruches 1 sowie ein Verfahren nach dem Oberbegriff des Anspruches 21.

Drahtlose Kommunikationssysteme im Bereich des zelluraren Mobilfunks sind sehr beliebt. Neben einer Sprachübertragung stehen bei heutigen Mobilfunkgeräten immer mehr breitbandige Dienste, wie eine Daten- und Bildübertragung im Vordergrund.

Für derartige drahtlose Kommunikationssysteme werden sehr hohe Frequenzen benötigt. Insbesondere ist ein Frequenzbereich oberhalb von 30 GHz von hohem Interesse.

### Dies hat mehrere Gründe:

Bei Frequenzen unterhalb dieses Bereiches ist das Frequenzspektrum sehr dicht besiedelt. Daher ist es schwierig, noch freie Frequenzbänder in diesem Bereich zu finden.

Bei Frequenzen von 24 GHz und 60 GHz tritt eine relativ starke atmosphärische Dämpfung ein. Dies ist günstig, weil somit Frequenzkanäle oft wiederverwendet werden können. Für einen zellularen Aufbau sind diese Frequenzen daher vorteilhaft, um eine hohe spektrale Effizienz zu erreichen. Zudem ermöglicht dieser Frequenzbereich eine Ausbildung von Sende- und Empfangsantennen mit sehr kleinen Abmessungen.

Bei dem Einsatz solch hoher Frequenzen benötigen insbesondere die Sendevorrichtungen wegen des Stromverdrängungseffekts (Skin-Effekt) besondere Leiter. Bei Frequenzen oberhalb von 20 GHz werden aus wirtschaftlichen Überlegungen für eine Signalübertragung von einer Sendevorrichtung zu einer Sendeantenne Hohlleiter eingesetzt. Dennoch sind die Hohlleiter teuer. Außerdem sind sie relativ störanfällig.

Bekannt ist es, optische Signalträger einzusetzen, die sehr störunempfindlich und zudem preiswert sind.

Aus der Veröffentlichung "Projekt P816-PF, Implementation frameworks for integrated wireless optical access networks, Deliverable 4, EURESCOM (2000)" ist ein sogenanntes "Radio-over-Fiber" Verfahren bekannt. Hierbei wird ein zu übertragendes hochfrequentes Radiosignal einem optischen Signal in geeigneter Weise aufgeprägt, um anschließend in einer Standardglasfaser übertragen werden zu können. Glasfasern haben nämlich bekannterweise eine extrem geringe Dämpfung von etwa 0,2 dB/km. Daher können ein Ort einer Erzeugung und ein Ort einer Abstrahlung des RF-Signals sehr weit voneinander entfernt sein. Diese Entfernung kann sogar mehrere Kilometer betragen. In einem Radio-over-Fiber System ist die Antenne lediglich für die Abstrahlung des Signals verantwortlich und damit sehr einfach aufgebaut. Die gesamte Komplexität steckt in einer einzigen Kontrollstation, die über Glasfasern sternförmig mit vielen Antennen an weit entfernten Orten verbunden ist. Mit diesem Ansatz bieten sich viele Vorteile in Bezug auf Kostenersparnis, Frequenzplanung und Handover.

Zur Erzeugung eines RF-Trägers in einer optischen Faser ist die sogenannte Heterodyn-Technik bekannt. Diese basiert darauf, dass nur die Intensität des Lichts nicht aber die Feldstärke der beteiligten Wellen gemessen werden kann. Für eine heterodyne Signalübetragung werden zwei sich in der Frequenz unterscheidende Wellen benötigt. Dabei ist der Frequenzunterschied dieser Wellen so groß, wie die Frequenz des benötigten RF-Signals selbst. Praktisch entsteht durch die beiden frequenzverschobenen Wellen eine Schwebungsfrequenz, die dem RF-Signal entspricht. Eine Rückwandlung des RF-Signals aus dem optischen in den elektrischen Bereich erfolgt bekannterweise über eine Photodiode. Dieses Element ist nicht in der Lage, wie andere optische Messgeräte auch, die elektrischen Felder der beiden optischen Wellen zu detektieren. Es kann nur die Lichtintensität des gesamten Feldes messen. Diese hängt aber quadratisch von der Summe der Feldgrößen ab. Die Gesamtintensität beinhaltet daher neben den Grundfrequenzen der beiden beteiligten Wellen auch Frequenzen die dem doppelten Frequenzwert entsprechen. Weiterhin sind Summen- und Differenzfrequenzen vorhanden. Die Photodiode kann nur der Differenzfrequenz zwischen den beiden Wellen folgen, daher ist ihr Ausgangsstrom proportional zum RF-Signal.

Bei der Heterodyne-Technik werden also zwei, sich in der Frequenz unterscheidende Wellen in der Photodiode überlagert. Der durch die Schwebungsfrequenz entstandene Ausgangsstrom der Photodiode, der dem RF-Signal entspricht, kann verstärkt sowie von einer Antenne abgestrahlt werden.

Ein aus der Veröffentlichung "M.Hickey, R. Marsland and T. Day, Lasers and Optronics, 15 Juli(1994)" bekanntes Verfahren, um zwei optische Wellen unterschiedlicher Frequenz zu erhalten, besteht darin, dass zwei Laser benutzt werden. Beide Laser werden über den Strom oder die Temperatur derart abgestimmt, dass sie den benötigten Frequenzunterschied aufweisen. Eine derartige Maßnahme hat jedoch den Nachteil, dass die Laser einen zufälligen Phasenunterschied aufweisen, weil sie unabhängig voneinander arbeiten. Dies macht sich als Phasenrauschen bemerkbar.

Um einen solchen Phasenunterschied zu regeln, sind optoelektronische Schaltungen, beispielsweise ein Analogon zu einem als PLL-Schleife (Phase Locked Loop) ausgeführter Phasenregelkreis, bekannt. Damit kann einer der beiden Laser ständig anhand seines Ausgangssignals kontrolliert und entsprechend nachgeregelt werden.

Eine weitere bekannte Lösung besteht darin, dass drei Laser verwendet werden. Der dritte Laser dient als Referenzgerät sozusagen als Master und wird mit einer relativ niedrigen Frequenz moduliert. Die beiden anderen somit als Slave arbeitende Laser sind phasenstarr an positive und negative Seitenbänder des Masterlasers gekoppelt. Diese Methode ist aus der Veröffentlichung "R.P.Braun et al., Wireless Personal Comm., 46, 85 (2000)" bekannt.

Der Erfindung liegt die Aufgabe zugrunde, eine Vorrichtung nach dem Oberbegriff des Anspruches 1 zu schaffen bzw. ein Verfahren nach dem Oberbegriff des Anspruches 21 anzugeben, das eine Erzeugung bzw. Modulation hochfrequenter Signale in einfacher und kostengünstiger Weise erlaubt.

Diese Aufgabe wird durch eine Vorrichtung mit den kennzeichnenden Merkmalen des Anspruches 1 in Verbindung mit seinen Oberbegriffsmerkmalen bzw. durch ein Verfahren mit den kennzeichnenden Merkmalen nach dem Anspruch 21 in Verbindung mit seinen Oberbegriffsmerkmalen gelöst.

Durch die Erfindung wird einerseits das RF-Signal aus nur einem einzigen Signallaser abgeleitet, so dass keine Probleme durch einen Phasenunterschied von zwei Lasern eintreten bzw. keine Maßnahmen für eine Phasenregelung nötig sind. Andererseits ist der Einsatz von kostengünstigen optischen Elementen möglich.

Die Erfindung beruht auf der Erkenntnis, dass bereits wenige Milliwatt an optischer Pumpleistung genügen, um eine der Pumpwelle entgegen laufende Welle durch stimulierte Brillouin-Streuung (SBS) in Lichtwellenleitern bzw. optischen Fasern zu verstärken.

Hierbei wird die Leistung der Pumplaser vorzugsweise so bemessen bzw. eingestellt, dass sie unter dem Schwellwert liegt der nötig ist, um eine gegenläufige Welle aus dem Rauschen in der Faser zu erzeugen. Aufgrund der schmalen Bandbreite der SBS ist es möglich, nur bestimmte schmalbandige Anteile eines breitbandigen Frequenzgemisches zu verstärken.

Durch den SBS-Effekt in dem Lichtwellenleiter und der mit dem SBS-Effekt verbundenen schmalen Bandbreite werden erfindungsgemäß nur zwei schmalbandige Anteile des breitbandigen Frequenzgemisches verstärkt, und zwar genau die für die die beiden sich in entgegengesetzter Richtung ausbreitenden Pumpwellen eine bestimmte Frequenzverschiebung aufweisen.

Im Grunde kann die optische Signalquelle zur Erzeugung des breitbandigen Frequenzgemisches nach der Erfindung als eine breitbandige kohärente Quelle ausgebildet sein, vorzugsweise als Fabry-Perot-Laser. Möglich ist auch, dass diese Quelle eine breitbandige nicht kohärente Quelle ist, vorzugsweise eine Photodiode oder ein Erbiumdotierter-Faserverstärker. Zweckmäßigerweise ist die optische Signalquelle als ein ein optisches Signal konstanter Wellenlänge erzeugender Signallaser ausgebildet. Bei dieser Lösung ist ein rauscharmes Verhalten gegeben.

Der besondere Vorteil der erfindungsgemäßen Vorrichtung bzw. des erfindungsgemäßen Verfahrens ist dessen Einfachheit. Alle benötigten Komponenten können Standardprodukte der optischen Nachrichtentechnik sein, die in großen Stückzahlen produziert werden und daher preiswert erhältlich sind.

Gegenüber anderen Verfahren hat das erfindungsgemäße Verfahren den Vorteil, dass keine komplizierten, anfälligen und teuren Komponenten benötigt werden, die nur in entsprechend ausgestatteten Einrichtungen gefertigt werden können.

Zur Übertragung eines auf die erfindungsgemäße Weise erzeugten hochfrequenten Signals kann eine kilometerlange optische Übertragungsfaser eingesetzt werden, so dass eine Sendeantenne und die Vorrichtung selbst weit voneinander entfernt sein können.

Eine auf diese Weise erzeugte Ausgangsfrequenz lässt sich außerdem einfach durchstimmen, wobei eine zusätzliche Modulation des RF-Signals mit der Nutzinformation ebenfalls einfach zu realisieren ist.

In günstiger Weise werden bei der Erfindung Pumplaser zur Einspeisung von zwei im Lichtwellenleiter verlaufenden Pumpwellen eingesetzt. Pumplaser sind als optoelektronische Standardkomponenten erhältlich und daher kostengünstig. Die Verstärkungsbandbreite der SBS kann durch eine Modulation der Pumplaser den jeweiligen Bedürfnissen angepasst werden.
Die beiden Pumplaser sorgen dafür, dass zwei um eine bestimmte Frequenz verschobene, schmalbandige Anteile des breitbandigen Frequenzgemisches durch SBS verstärkt werden.

Das breitbandige Frequenzgemisch wird erzeugt, indem ein optischer Modulator, der an den Ausgang des Signallasers angeschlossen ist, durch einen Generator mit einer festen Frequenz angesteuert wird. Die Ausgangsspannung des Generators wird so gewählt, dass der Modulator in einem nichtlinearen Bereich seiner Kennlinie arbeitet, so dass im Frequenzspektrum des modulierten optischen Signals Vielfache der Generatorfrequenz als obere und untere Seitenbänder vorhanden sind. Der Frequenzabstand der Seitenbänder hängt dabei von der Frequenz des Generators ab.

Zweckmäßigerweise ist zwischen dem Modulator und dem Signallaser ein Polarisator vorhanden. Da der dem Signallaser nachfolgende Modulator nur Licht einer bestimmten Polarisation modulieren kann, stellt der Polarisator diese ohne aufwändige Maßnahmen entsprechend ein. Der Modulator ist vorzugsweise als ein Mach-Zehnder-Modulator ausgebildet, welcher ebenfalls als preiswerte Komponente beschafft werden kann.

Wird der Generator zum Beispiel mit einer Frequenz von 10 GHz betrieben, dann befinden sich im Spektrum des modulierten optischen Signals mit der Frequenz f Frequenzanteile f+-10GHz, f+-20 GHz, f +- 30 GHz usw. Für eine Verstärkung von zwei Seitenbändern dieses Frequenzgemisches besitzen die beiden Pumplaser günstigerweise ein Ausgangssignal mit einer Frequenz derart, bzw. die derart einstellbar ist, dass sie um beispielsweise 11 GHz größer ist als das jeweilige zu verstärkende Seitenband.

Da also die beiden Wellen die sich an der Photodiode heterodyn überlagern sollen durch die nichtlineare Kennlinie des Modulators aus derselben Quelle abgeleitet werden, haben sie eine feste Phasenbeziehung zueinander. Dementsprechend tritt im Ausgangssignal kein Phasenrauschen auf.

Für eine Gewinnung des Frequenzgemisches sind jedoch auch andere Lösungen möglich, beispielsweise eine breitbandige kohärente oder nicht kohärente Lichtquelle.

Das Frequenzgemisch und die beiden Pumpwellen breiten sich in entgegengesetzter Richtung zueinander in einem Lichtwellenleiter aus. Ein Lichtwellenleiter im Sinne dieser Beschreibung ist jedes optische Element zur Leitung des Lichts. Der Lichtwellenleiter kann eine Lichtfaser, insbesondere eine Glasfaser sein, wobei diese bevorzugterweise als eine hoch-nichtlineare Faser oder als mikrostrukturierte Faser ausgebildet sein kann, aber auch preisgünstige Standard-Singlemode Glasfasern können eingesetzt werden.

Eine Phasenverschiebung zwischen den beiden verstärkten schmalbandigen Anteilen des Frequenzgemisches in Folge einer Faserdispersion oder durch nichtlineare Effekte wie eine Selbst- und Kreuzphasenmodulation lässt sich durch eine geeignete Abstimmmung der Faserlänge in vorteilhafter Weise ausgleichen.

Um eine einfache optoelektronische Vorrichtung mit wenigen Komponenten zu schaffen, wobei auch hier Standardkomponenten eingesetzt werden können, ist weiterhin vorgesehen, dass die Ausgänge der beiden Pumplaser über einen Koppler kombiniert werden, an dessen Ausgang ein Zirkulator angeschlossen ist. Der Ausgang des optischen Modulators und ein Ausgang des Zirkulators sind mit dem Lichtwellenleiter bzw. der Faser insbesondere so verbunden, dass sich die Seitenbänder des Signallasers in entgegengesetzter Richtung zu den beiden Pumpwellen ausbreiten können.

In einer weiteren bevorzugten Weiterbildung der Erfindung ist vorgesehen, dass ein Photoelement, insbesondere eine Photodiode, vorhanden ist, das bzw. die derart ausgebildet ist, dass eine heterodyne Überlagerung der beiden verstärkten Seitenbänder gegeben ist, wobei der Ausgangsstrom des Photoelementes einer durch die verstärkten Seitenbänder gebildeten Schwebungsfrequenz folgt, die einer RF-Frequenz entspricht. Eine solche Maßnahme erlaubt eine Kostensenkung in einfacher Weise, weil für eine geeignete Signalgewinnung wenige Bauelemente benötigt werden und Photodioden als preiswerte Komponenten erhältlich sind.

Praktisch ist es, wenn an einem Ausgang des Zirkulators einfach die Photodiode nachgeschaltet wird. Der Ausgang der Photodiode kann dann an einer Antenne oder einem Antennenverstärker angeschlossen sein.

Der Ausgangsstrom der Photodiode hängt von der Gesamtintensität des optischen Signals ab. Diese ist wiederum abhängig vom Summenquadrat der Amplituden der beiden Seitenbänder. Dementsprechend beinhaltet die Gesamtintensität Frequenzanteile mit der Grundfrequenz der beteiligten Seitenbänder, ihrem jeweiligen Doppelten, sowie Summen- und Differenzfrequenzen zwischen Ihnen. All diese Frequenzen, mit Ausnahme der Differenzfrequenz, liegen im optischen Bereich. Dementsprechend, kann die zeitliche Änderung des Ausgangsstroms der Photodiode lediglich der Schwebungsfrequenz zwischen den beiden verstärkten Wellen folgen.

Die Photodiode detektiert sozusagen eine einzige Frequenz, und zwar nur die Differenzfrequenz zwischen den beiden Seitenbändern. Die Differenzfrequenz entspricht aber in vorteilhafter Weise genau dem RF-Signal. Somit ändert sich der Ausgangsstrom der Photodiode periodisch mit der Frequenz des RF-Signals.

Die Leistung der Pumpwellen in dem Lichtwellenleiter liegt bevorzugterweise unter dem Schwellwert der SBS der nötig ist um eine entgegengesetzt laufende Welle aus dem Rauschen in der Faser zu erzeugen. Die durch den, im Bereich seiner nichtlinearen Kennlinie arbeitenden, optischen Modulator erzeugten Seitenbänder breiten sich in entgegengesetzter Richtung zu den beiden Pumpwellen aus, so dass aufgrund der schmalen Bandbreite der SBS nur die beiden Seitenbänder verstärkt werden können, für die die Pumpwellen eine bestimmte Frequenzverschiebung aufweisen. Alle anderen Seitenbänder werden durch die Dämpfung des Lichtwellenleiters geschwächt. Daher stehen mit Vorteil an einem Ausgangsport des Zirkulators vorzugsweise nur zwei starke Wellen zur Verfügung.

Für ein Funktionieren des Systems auf die oben beschriebene Weise ist im Prinzip der gesamte Transparenzbereich des jeweiligen Lichtleitermediums möglich.

Von Vorteil ist aber vor Allem das C-Band der optischen Telekommunikation, da in diesem Bereich preiswerte Komponenten (Laser, Photodioden, Zirkulatoren und dergleichen) verfügbar sind.

Eine günstige sowie praktische Anwendung der Erfindung ist daher gegeben, wenn die Lichtquelle, beispielsweise der Signallaser eine Frequenz im C-Band besitzt, beispielsweise mit einer Frequenz von 193,4 THz, dies entspricht einer Wellenlänge von etwa 1550 nm und sich die Wellen in einer Standard-Singlemode Glasfaser ausbreiten. Der optische Modulator erzeugt dann Oberwellen die als positive und negative Seitenbänder, mit einer durch den Generator bestimmten Frequenzverschiebung, um die 193,4 THz der Grundwelle herum gruppiert sind. Für eine Verstärkung zweier dieser Seitenbänder müssen die beiden Pumpwellen, die sich in entgegengesetzter Richtung im Lichtwellenleiter ausbreiten, eine um etwa 11 GHz höhere Frequenz haben als die jeweiligen zu verstärkenden Seitenbänder.

Die Vorrichtung kann dann in einem Funknetz, insbesondere ein Mobilfunknetz (Handy-Netz) bzw. in einer Sendestation eines Funknetzes eingesetzt werden.

Die Erfindung ist insbesondere geeignet im Bereich von breitbandigen Diensten, wie eine Daten- und Bildübertragung. Auch bei drahtlosen Computernetzen (WLAN) ist die erfindungsgemäße Lösung interessant. Während drahtgebundene lokale Computernetzwerke (Ethernet LAN) z.B. 10 Gbit/s übertragen, erreichen drahtlose Lösungen wenige 10 Mbit/s (z.B. 54 Mbit/s für IEEE 802.11). Durch die Erfindung können in kostengünstiger Weise erheblich höhere Werte erreicht werden.

Weitere vorteilhafte Weiterbildungen der Erfindung sind in den Unteransprüchen gekennzeichnet.

Die Erfindung sowie weitere Vorteile derselben, werden anhand der Figurenbeschreibung näher erläutert.

Es zeigt:
- Fig. 1: ein Blockdiagramm einer bevorzugten Ausführungsform einer erfindungsgemäßen Vorrichtung, und
- Fig. 2: ein Frequenzspektrum-Diagramm, und zwar nach einem Modulator, hinter dem Koppler und nach einem Ausgang des Zirkulators entsprechend der bevorzugten Ausführungsform der erfindungsgemäßen Vorrichtung.

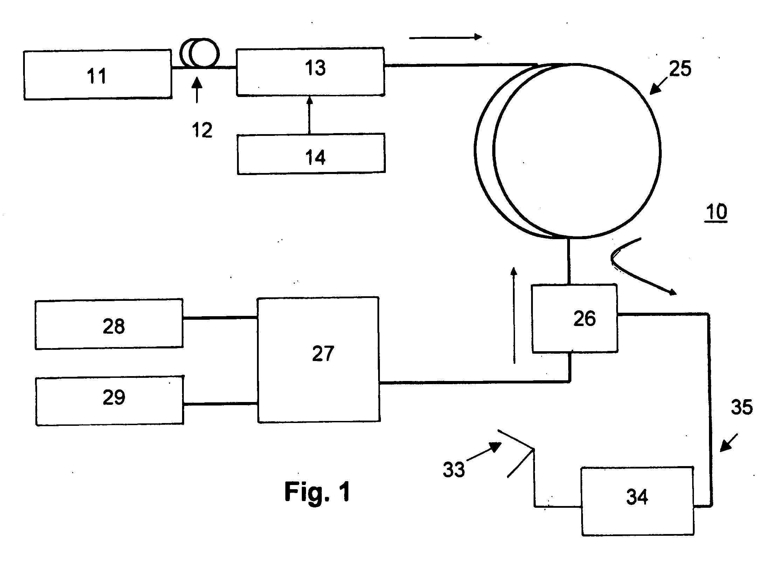

Fig. 1 zeigt ein Beispiel einer erfindungsgemäßen Vorrichtung 10 insbesondere einer Sendevorrichtung in einem Mobilfunknetz.

Die Vorrichtung 10 umfasst einen Signallaser 11. Dieser erzeugt vorzugsweise kohärentes Licht mit der Wellenlänge bzw. Frequenz SF in einem Band der optischen Telekommunikation, vorzugsweise im C-Band (1528.77 - 1560.61 nm bzw. 196,1 -192,1 THz).

Die Beschränkung der erfindungsgemäßen Vorrichtung auf das C-Band der optischen Nachrichtentechnik ist nicht zwingend erforderlich. Sie bietet aber den Vorteil, dass in diesem Bereich billige optische Komponenten verfügbar sind. Wird der Aufbau nach Fig. 1 in einem anderen Wellenbereich betrieben, muss man die Wellenlängen der Pumplaser 28, 29 und des Signallasers entsprechend den Bedingungen in diesem Wellenbereich anpassen. Speziell die benötigte Frequenzverschiebung ist dann nicht mehr 11 GHz.

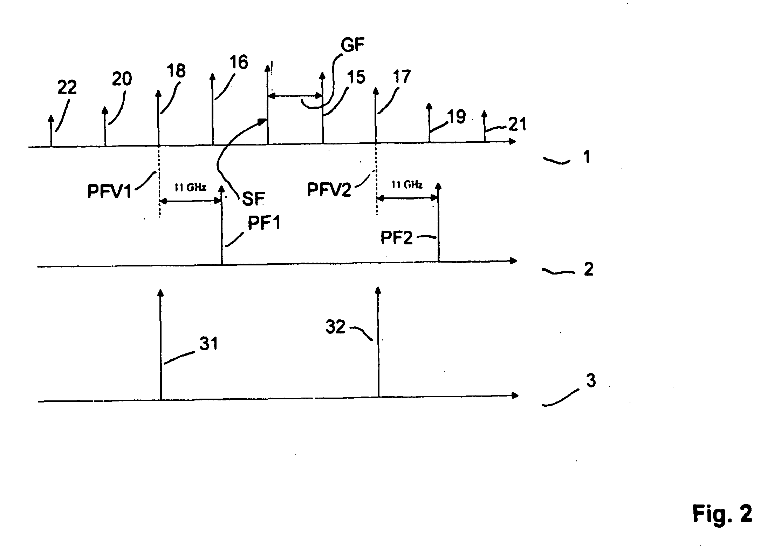

Hinter dem Signallaser 11 befindet sich ein Polarisator 12, damit das Laserlicht des Signallasers 11 eine bestimmte Polarisation hat. Dies ist wichtig, um einen Modulator 13, insbesondere einen Mach-Zehnder-Modulator 13, wie in Fig. 1 abgebildet, verwenden zu können. Der Mach-Zehnder-Modulator 13 wird mir einer festen Generatorfrequenz GF angesteuert, wobei die Generatorfrequenz GF in Fig. 2 dargestellt und die Anordnung eines an dem Mach-Zehnder-Modulator 13 angeschlossenen Generators 14 in Fig. 2 gezeigt ist.

In Fig. 2 ist das Frequenzspektrum an drei ausgewählten Punkten der Fig. 1 gezeigt. Oben ist das Spektrum nach dem Mach-Zehnder-Modulator 13 gezeigt. In der Mitte ist das Spektrum hinter einem Koppler 27 dargestellt. Unten ist das Ausgangsspektrum hinter einem Zirkulator 26 und vor einem Eingang einer Photodiode 34 gezeigt.

Eine Ausgangsspannung des Generators 14 wird so gewählt, dass der Mach-Zehnder-Modulator 13 im nichtlinearen Bereich seiner Kennlinie arbeitet. Im Spektrum des modulierten Signals sind dann neben der Frequenz des Signallasers SF um Vielfache der Generatorfrequenz GF verschobene Frequenzen als obere und untere Seitenbänder vorhanden.

Der obere Bereich 1 des Diagramms in Fig. 2 zeigt das optische Spektrum nach dem Mach-Zehnder-Modulator 13. Dieser erzeugt aufgrund seines Betriebs im nichtlinearen Bereich seiner Kennlinie also obere Seitenbänder 15, 17, 19 und 21 sowie untere Seitenbänder 16, 18, 20 und 22 und zwar beispielsweise obere Seitenbänder mit den Frequenzen +10 GHz, +20 GHz, +30 GHz, und untere Seitenbänder mit - 10 GHz, -20 GHz, -30 GHz, gegenüber der Signallaserfrequenz SF von z.B. 193,4 THz. Der Frequenzanteil +10 GHz, der mit 15 gekennzeichnet ist, entspricht dabei einem ersten positiven Seitenband, der Frequenzanteil -10 GHz, der mit 16 gekennzeichnet ist, entspricht einem ersten negativen Seitenband. Die Frequenzanteile 18-22 und 17-21 stellen weitere Seitenbänder bzw. Oberwellen dar. Im Spektrum des optischen Signals hinter dem Modulator sind praktisch neben der Frequenz des Signallasers SF um Vielfache der Generatorfrequenz GF verschobene obere und untere Seitenbänder (Oberwellen) vorhanden. Der Frequenzabstand dieser Seitenbänder hängt von der Frequenz des Generators 13 ab.

Die beiden Pumplaser 28, 29 werden so eingestellt, beispielsweise über eine Temperaturregelung, dass ihre Ausgangsfrequenz PF1, PF2 um etwa beispielsweise 11 GHz größer als das jeweilige zu verstärkende Seitenband 17, 18 ist. Als Pumplaser 28, 29 lassen sich beispielsweise DFB-Laser einsetzen.

Um sowohl den Signal- als auch die Pumplaser vor einer Zerstörung durch rücklaufende Wellenanteile zu schützen müssen sich hinter jedem der drei Laser optische Isolatoren befinden. Praktischerweise sind derartige Isolatoren bereits standardmäßig in die für die optische Telekommunikation verwendeten DFB-Laserdioden eingebaut.

Solange die SBS-Bandbreite von insbesondere etwa 35 MHz nicht durch die Frequenz GF des Generators 14 und die Bandbreite der beiden Pumplaser 28, 29 unterschritten wird, lässt sich die Ausgangsfrequenz durch eine Regelung der Frequenz des Generators 14 und der Pumplaser 28, 29 beliebig einstellen. Die Regelung der Ausgangsfrequenz der Pumplaser 28, 29 kann im einfachsten Fall durch eine Temperatur- und/oder Stromänderung erfolgen. Andere Möglichkeiten bieten abstimmbare Lasersysteme und Gitterkonfigurationen oder breitbandige Laser mit einem nachgeschalteten Faser-Bragg-Gitter. Die Abstimmung der Generatorfrequenz GF und der Pumplaserfrequenzen PF1 und PF2 erfolgt insbesondere über eine gemeinsame Steuerung.

Wie weiterhin in Fig. 1 zu sehen ist, ist der Ausgang des Mach-Zehnder-Modulators 13 an den Lichtwellenleiter, insbesondere an eine Standard-Single-Mode Faser 25 gekoppelt. Diese wiederum ist an ihrem anderen Ende mit einem Zirkulator 26 verbunden. Dieser wird durch einen optischen Koppler 27 gespeist, der die zwei Pumpfrequenzen PF1 und PF2 führt, wie der mittlere Bereich 2 des Diagramms in Fig. 2 zeigt.

Die Seitenbänder des Signallasers 11 breiten sich in entgegengesetzter Richtung zu den beiden Pumplaserwellen 28, 29 aus.

Die Leistung der Pumpwellen in der Faser 25 liegt unterhalb des Schwellwerts der SBS, der nötig ist, um eine Stokeswelle aus dem Rauschen in dem Lichtwellenleiter 25 zu erzeugen. Sie ist aber groß genug, um Spektralanteile des gegenläufigen Frequenzgemisches zu verstärken.

Zu einer Verstärkung kommt es nur, wenn die Pumpwellen eine bestimmte Frequenzverschiebung gegenüber den zu verstärkenden gegenläufigen Wellen aufweisen und verstärkt wird nur was in die Verstärkungsbandbreite der SBS in dem benutzten Lichtwellenleiter passt. In der bevorzugten Standard Singlemode Glasfaser (SSMF) 25 beträgt die Frequenzverschiebung bei einer Pumpwellenlänge von 1550 nm etwa 11 GHz und die Verstärkungsbandbreite ist etwa 35 MHz. Die Frequenzverschiebung zwischen den zu verstärkenden Seitenbändern und den beiden Pumplasern ist im mittleren Bereich des Diagramms in Fig. 2 dargestellt.

Aufgrund der relativ schmalen Bandbreite der SBS werden beispielsweise nur die beiden Oberwellen bzw. Seitenbänder 18 und 19, verstärkt. Alle anderen Oberwellen bzw. Seitenbänder 15, 17, 21 und 16, 20, 22 sowie die Grundwelle (Signalfrequenz SF) werden durch die Faserdämpfung geschwächt. Um dies zu erreichen muss der Lichtwellenleiter 25 eine entsprechende Länge aufweisen. Dementsprechend stehen am Ausgang des Zirkulators 26 die beiden starken Wellen 31, 32 zur Verfügung, wie der untere Bereich 3 des Diagramms in Fig. 2 zeigt. Das Frequenzgemisch wird also erfindungsgemäß verändert.

Der Zirkulator 26 dient der richtungsabhängigen Ein- und Auskopplung der Wellen. Wie in Fig. 1 gezeigt ist, ermöglicht er auf der einen Seite die Einspeisung der Pumpwellen in das Ende der Faser 25. Gleichzeitig können die in der Faser 25 durch die SBS verstärkten Seitenbänder 17, 18 des Signallasers 11 über ihn ausgekoppelt werden.

Anzumerken ist, dass die SBS der nichtlineare Effekt mit den kleinsten Schwellwert ist. Auch andere Fasersorten ermöglichen eine SBS und können dementsprechend eingesetzt werden. Man muss in diesem Fall die Frequenzverschiebung der Pumplaser 28, 29 dem Fasertyp entsprechend anpassen. Die benötigte Länge der Faser 25 hängt von der eingesetzten Fasersorte ab.

Die beiden verstärkten Seitenbänder 17, 18 werden vorzugsweise in einem Photoelement, insbesondere einer Photodiode 34 heterodyn überlagert. Der Ausgangsstrom der Photodiode 34 hängt von der Gesamtintensität des optischen Signals ab. Diese ist wiederum anhängig vom Summenquadrat der Amplituden. Da Photodioden für die Summenfrequenz und die Harmonischen der beteiligten optischen Frequenzen zu langsam sind, folgt der Ausgangsstrom der Photodiode 34 lediglich der Schwebungsfrequenz zwischen den beiden durch den SBS-Effekt verstärkten Seitenbändern. Diese entspricht aber genau der gewollten RF-Frequenz. Wenn die Generatorfrequenz GF beispielsweise 10 GHz beträgt, dann folgt mit den beiden Seitenbändern, bzw. Oberwellen 17, 18 für die Schwebung eine Frequenz von 40 GHz. Werden dagegen die beiden dritten Seitenbänder, bzw. die Oberwellen 19, 20 verstärkt, ergeben sich für das RF-Signal 60 GHz. Eine entsprechend kleinere oder größere RF-Frequenz ergibt sich, wenn andere Seitenbänder verstärkt werden.

Bei einer Generatorfrequenz von beispielsweise 5 GHz folgen Frequenzen bzw. Schwebungsfrequenzen von 10, 20, 30 GHz usw., je nachdem welche Seitenbänder verstärkt werden. Die Ausgangsfrequenz welche die Photodiode liefert lässt sich dementsprechend durch eine Regelung der Frequenz des Generators (GF) und der beiden Pumplaser (PF1 und PF2) einstellen.

Zur Abstrahlung des RF-Signals ist der Ausgang der Photodiode 34 an die Antenne 33 angeschlossen, wobei auch ein Antennenverstärker zwischengeschaltet werden kann, wie Fig. 1 veranschaulicht.

Alle Teile der Vorrichtung mit Ausnahme einer Photodiode 34 sind von einer Antenne 33 beispielsweise einige Kilometer entfernt angeordnet. Der Ausgang des Zirkulators ist mit der Photodiode 34 über eine eine geringe Dämpfung (vorzugsweise etwa 0,2 dB/km) aufweisende kilometerlange optische Übertragungsfaser 35 optisch verbunden. Wird bei großen Entfernungen die Dämpfung der optischen Übertragungsfaser zu groß, lassen sich aus der optischen Nachrichtentechnik bekannte optische Verstärker, beispielsweise Erbium dotierte Faserverstärker, für eine Verstärkung des Signals einsetzen.

Auch der Lichtwellenleiter 25 in dem die SBS stattfindet lässt sich zur Übertragung des RF-Signals über große Entfernungen zwischen Kontroll- und Sendestation einsetzen. In diesem Fall befindet sich die Signalquelle 11 samt Polarisator 12, Modulator 13 und Generator 14 am Ort der Kontrollstation während sich die beiden Pumplaser (28, 29), der Koppler 27, der Zirkulator 26, die Photodiode 34 und die Antenne 33 kilometerweit entfernt, am Ort der Sendestation befinden.

Wird das Ausgangssignal auf die erfindungsgemäße Weise moduliert, kann man es direkt auch als optisches Eingangssignal für Radio-over-Fiber Systeme verwenden.

Wenn die Erfindung für mobile Funksysteme, beispielsweise Mobilfunk- oder WLAN, genutzt werden soll muss das RF-Signal zusätzlich mit der Nutzinformation des entsprechenden Systems moduliert werden.

Eine Modulation des RF-Signals mit einem Nutzsignal kann durch einen zusätzlichen optischen Modulator erfolgen, der an beliebiger Stelle im System angebracht werden kann. Einfacher und billiger ist eine direkte Modulation des Signal- (11) oder eines der Pumplaser (28, 29). Wird z.B. der Ansteuerstrom der Laser in Abhängigkeit vom Nutzsignal verändert, führt dies zu einer Wellenlängen- bzw. Frequenzänderung ihres Ausgangssignals. Entspricht die Frequenzverschiebung zwischen Signal- und Pumplasern nicht genau der für SBS notwendigen (11 GHz mit einer Bandbreite von 35 MHz), so kann keine Verstärkung durch SBS stattfinden. Durch die Temperatur- oder Stromänderung der Laser im Takt der Nutzinformation tritt also eine Variation der Frequenzverschiebung zwischen Signal- und Pumplaser auf. Entspricht sie der SBS-Verschiebung für beide Seitenbänder, so entsteht in der Photodiode ein Überlagerungssignal, sonst nicht. Es kommt dementsprechend zu einer Intensitätsmodulation des RF-Signals an der Photodiode 34 in Abhängigkeit von der Nutzinformation.

Eine direkte und einfach zu realisierende Änderung des Ausgangssignals des Generators 14 führt ebenfalls zu einer Modulation des RF-Signals. Bei einer Frequenzänderung des Generatorsignals 14 wird das Ausgangsspektrum des optischen Modulators (Fig.2 Oben) gegenüber den Frequenzen der Pumplaser (Fig.2 Mitte) verschoben. Auf Grund der geringen Bandbreite der SBS führt bereits eine geringe Verschiebung dazu, dass keine Brillouin-Streuung mehr in der Faser stattfindet. Das RF-Signal an der Photodiode 34 ist dadurch ebenfalls wieder Intensitätsmoduliert.

Sollte die Verstärkungsbandbreite der SBS für extrem hochbitratige Anwendungen nicht ausreichen, lässt sie sich durch eine zusätzliche Modulation der Pumplaser 28, 29 vergrößern und den jeweiligen Bedingungen anpassen, wie näher in der Veröffentlichung "T. Tanemura, Y. Takushima, K. Kikuchi, Opt. Lett. 27, 1552 (2002)" erläutert ist.

Auch hoch-nichtlineare und/oder mikrostrukturierte Fasern können eingesetzt werden. Dies ist näher in "T. Schneider, Nonlinear Optics in Telecommunications, Springer Berlin, Heidelberg, New York (2004)" beschrieben.

Alternativ zu der in Fig. 1 dargestellten Vorrichtung kann auf den Modulator 13 und den Generator 14 verzichtet werden. Wird als Signallaser 11 eine breitbandige kohärente Quelle, wie z.B. ein Fabry-Perot-Laser, eingesetzt, so weist dieser ein breites Spektrum auf. Teile dieses Spektrums können auf die oben beschriebene Weise mit der SBS in der Faser 25 verstärkt und in der Photodiode 34 heterodyn überlagert werden.

Anstelle der breitbandigen kohärenten Quelle lässt sich als Signallaser 11 auch eine breitbandige nichtkohärente Quelle , wie z.B. eine Photodiode einsetzen. In diesem Fall ist allerdings die Phasenbeziehung zwischen den spektralen Anteilen nicht mehr konstant, was zu einem Phasenrauschen im RF-Signal führt. Ein zum Signallaser vergleichbare Lichtquelle kann also auch eine Photodiode sein.

Wird der Signallaser 11 direkt mit dem Generator 14 angesteuert, dann lässt sich ebenfalls auf den optischen Modulator 13 verzichten. Dabei muss die Ausgangsleistung des Generators 14 so hoch sein, dass der Signallaser im nichtlinearen Bereich seiner Kennlinie arbeitet. In diesem Fall weist das Ausgangsspektrum des Signallasers 11 Seitenbänder der Generatorfrequenz auf, die auf die oben beschriebene Weise durch die Pumplaser 28, 29 einzeln verstärkt und heterodyn überlagert werden.

Die bevorzugte Lösung zeichnet sich also dadurch aus, dass der Signallaser 11 beispielsweise über den Modulator 13 mit dem Lichtwellenleiter 25 gekoppelt ist, wie Fig. 1 zeigt. Der Modulator 13 ist an dem Generator 14 angeschlossen. Der Modulator wird im nichtlinearen Bereich seiner Kennlinie betrieben, wodurch Seitenbänder entstehen. Bestimmte Seitenbänder werden über den SBS-Effekt durch die beiden in der Faser gegenläufigen Pumpwellen 28, 29 verstärkt, alle anderen Seitenbänder werden durch die Faserdämpfung geschwächt. Das RF-Signal entsteht durch die heterodyne Überlagerung der beiden Seitenbänder in einer Photodiode 34.

Die Erfindung ist nicht nur auf die dargestellten Beispiele beschränkt. Einzelmerkmale dieser Beschreibung können untereinander kombiniert werden.

### BEZUGSZEICHENLISTE

- 1-3: Diagrammbereiche
- 10: Vorrichtung
- 11: Signallaser
- 12: Polarisator
- 13: Mach-Zehnder-Modulator
- 14: Generator
- 15-22: Seitenbänder
- 25: Lichtwellenleiter
- 26: Zirkulator
- 27: Koppler
- 28: erster Pumplaser
- 29: zweiter Pumplaser
- 31,32: Wellen
- 33: Antenne
- 34: Photodiode
- 35: Übertragungsfaser

## Patentansprüche

1. Vorrichtung (10) mit mehreren Lasern (28, 29) zur Erzeugung und Modulation eines hochfrequenten Signals für ein drahtloses Kommunikationssystem, mit einem Lichtwellenleiter (25), **dadurch gekennzeichnet, dass**
a) eine ein optisches Signal erzeugende Signalquelle vorhanden ist, die an einer Seite des Lichtwellenleiters (25) angeordnet ist,
b) wobei mindestens ein Mittel vorhanden ist, welches Seitenbänder im Lichtwellenleiter (25) erzeugt, die sich als Frequenzgemisch ausbreiten,
c) dass zwei Pumplaser (28, 29) zur Einspeisung eines Signals auf einer entgegengesetzten Seite des Lichtwellenleiter (25) vorhanden sind, die so abgestimmt sind, dass sie zusammen zwei Seitenbänder des Frequenzgemisches durch eine stimmulierte Brillouin-Streuung verstärken und die anderen Seitenbänder durch eine Dämpfung in dem Lichtwellenleiter (25) geschwächt werden.

2. Vorrichtung nach Anspruch 1, **dadurch gekennzeichnet, dass** die optische Signalquelle als ein ein optisches Signal konstanter Wellenlänge erzeugender Signallaser (11) ausgebildet ist.

3. Vorrichtung nach Anspruch 1, **dadurch gekennzeichnet, dass** die optische Signalquelle als eine breitbandige kohärente Quelle ausgebildet ist, vorzugsweise als Fabry-Perot-Laser oder als eine breitbandige nicht kohärente Quelle, vorzugsweise als Photodiode oder Erbiumdotierter-Faserverstärker.

4. Vorrichtung nach einem der vorhergehenden Ansprüche, **dadurch gekennzeichnet, dass** das Mittel ein optischer Modulator (13) ist, der in einem Bereich seiner nichtlinearen Kennlinie betrieben wird und durch einen Generator (14) steuerbar ausgebildet ist, wobei der Modulator (13) zwischen dem Signallaser (11) und dem Lichtwellenleiter (25) angeordnet ist.

5. Vorrichtung nach Anspruch 4, **dadurch gekennzeichnet, dass** ein Generator (14) mit den Pumplasern (28, 29) derart gekoppelt ist, dass eine Abstimmung der Frequenz des hochfrequenten Signals möglich ist.

6. Vorrichtung nach einem der Ansprüche 3 und 4, **dadurch gekennzeichnet, dass** zwischen dem Modulator (13) und der Signalquelle, insbesondere dem Signallaser (11),ein Polarisator (12) vorhanden ist.

7. Vorrichtung nach einem der Ansprüche 1 bis 6, **dadurch gekennzeichnet, dass** der optische Modulator (13) als Mach-Zehnder-Modulator ausgebildet ist.

8. Vorrichtung nach einem der Ansprüche 1 bis 6, **dadurch gekennzeichnet, dass** der optische Modulator (13) als Elektroabsorptionsmodulator ausgebildet ist.

9. Vorrichtung nach einem der Ansprüche 1 bis 3, **dadurch gekennzeichnet, dass** das Mittel die Signalquelle, insbesondere der Signallaser (11) selbst ist, die bzw. der im nichtlinearen Bereich seiner Kennlinie angesteuert wird und somit die benötigten Seitenbänder selbst erzeugt.

10. Vorrichtung nach einem der vorhergehenden Ansprüche, **dadurch gekennzeichnet, dass** die Pumplaser (28, 29) jeweils ein Ausgangssignal mit einer Frequenz besitzen, die um die Frequenzverschiebung der Brillouinstreuung in dem verwendeten Lichtwellenleiter (25) höher ist als das jeweilige zu verstärkende Seitenband, und die Pumplaser (28, 29) so dimensioniert sind, dass die Leistung ihrer beiden Pumpwellen in dem Lichtwellenleiter (25) zu einer Verstärkung von Seitenbändern führt.

11. Vorrichtung nach einem der vorhergehenden Ansprüche, **dadurch gekennzeichnet, dass** die Ausgänge der beiden Pumplaser (28, 29) über einen Koppler (27) kombiniert sind, an dessen Ausgang ein Zirkulator (26) angeschlossen ist.

12. Vorrichtung nach einem der vorhergehenden Ansprüche, **dadurch gekennzeichnet, dass** ein Photoelement (34), insbesondere eine Photodiode, vorhanden ist, das derart ausgebildet ist, dass eine heterodyne Überlagerung der beiden verstärkten Seitenbänder gegeben ist, wobei sein Ausgangsstrom einer durch die verstärkten Seitenbänder gebildeten Schwebungsfrequenz folgt, die einer RF-Frequenz entspricht.

13. Vorrichtung nach Anspruch 12, **dadurch gekennzeichnet, dass** an einem Ausgang des Photoelementes (34) eine Antenne (33) oder ein Antennenverstärker angeschlossen ist.

14. Vorrichtung nach Anspruch 11 und nach einem der Ansprüche 12 bis 13, **dadurch gekennzeichnet, dass** an einem Ausgang des Zirkulators (26) das Photoelement (34) angeschlossen ist.

15. Vorrichtung nach Anspruch 14, **dadurch gekennzeichnet, dass** der Zirkulator (26) mit dem Photoelement (34) über eine, vorzugsweise kilometerlange, optische Übertragungsfaser (35) verbunden ist.

16. Vorrichtung nach einem der vorhergehenden Ansprüche, **dadurch gekennzeichnet, dass** sowohl der Signallaser (11) als auch die Pumplaser (28, 29) ein Laserlicht mit einer Wellenlänge im C-Band der optischen Telekommunikation aufweisen.

17. Vorrichtung nach einem der vorhergehenden Ansprüche, **dadurch gekennzeichnet, dass** der Lichtwellenleiter (25) als eine Glasfaser ausgebildet ist.

18. Vorrichtung nach Anspruch 17, **dadurch gekennzeichnet, dass** der Lichtwellenleiter (25) als eine hoch-nichtlineare Faser ausgebildet ist.

19. Vorrichtung nach einem der Ansprüche 16 bis 18, **dadurch gekennzeichnet, dass** der Lichtwellenleiter (25) als mikrostrukturierte Faser ausgebildet ist.

20. Vorrichtung nach einem der Ansprüche 17 bis 19, **dadurch gekennzeichnet, dass** der Lichtwellenleiter (25) eine Standard-Singlemode Glasfaser ist.

21. Verfahren zur Erzeugung eines hochfrequenten Signals über einen Lichtwellenleiter (25) für ein drahtloses Kommunikationssystem, insbesondere mit einer Vorrichtung (10) nach einem der vorhergehenden Ansprüche, **gekennzeichnet durch** eine Einspeisung eines Seitenbänder umfassenden Frequenzgemisches an einem Ende des Lichtwellenleiters (25), und eine Einspeisung von zwei Pumpwellen am anderen Ende des Lichtwellenleiters (25), wobei die Pumpwellen jeweils ein Seitenband **durch** eine stimulierte Brillouin-Streuung verstärken, während die anderen Seitenbänder **durch** eine optische Dämpfung in dem Lichtwellenleiter (25) geschwächt werden.

22. Verfahren nach Anspruch 21, **gekennzeichnet durch** eine heterodyne Überlagerung der zwei verstärkten Seitenbänder.

23. Verfahren nach Anspruch 21 oder 22, **gekennzeichnet durch** eine, insbesondere zusätzliche, Modulation mit einer Nutzinformation, die mindestens einem der Seitenbänder aufgeprägt wird.

24. Verfahren nach Anspruch 23, **dadurch gekennzeichnet, dass** die Nutzinformation durch eine Modulation eines Signallasers (11) den Seitenbändern aufgeprägt wird.

25. Verfahren nach Anspruch 23, **dadurch gekennzeichnet, dass** die Nutzinformation durch eine Modulation eines Pumplasers (28 bzw. 29) einem der Seitenbänder aufgeprägt wird.

26. Verfahren nach einem der vorhergehenden Ansprüche, **dadurch gekennzeichnet, dass** eine Nutzinformation den Seitenbändern durch eine zusätzliche Modulation des Generators (14) aufgeprägt wird.

## Claims

1. Device (10) with multiple lasers (28, 29) for generating and modulating a high-frequency signal for a wireless communication system, having an optical waveguide (25), **characterized in that**
a) a signal source that generates an optical signal is present, and is located on one side of the optical waveguide (25),
b) wherein at least one means is present that generates sidebands in the optical waveguide (25) which propagate as a frequency mixture,
c) **in that** two pump lasers (28, 29) for injecting a signal are present on an opposite side of the optical waveguide (25) and are tuned such that together they amplify two sidebands of the frequency mixture by stimulated Brillouin scattering, and the other sidebands are weakened by an attenuation in the optical waveguide (25).

2. Device according to claim 1, **characterized in that** the optical signal source is designed as a signal laser (11) generating an optical signal of constant wavelength.

3. Device according to claim 1, **characterized in that** the optical signal source is designed as a coherent wideband source, preferably as a Fabry-Perot laser, or as an incoherent wideband source, preferably as a photodiode or erbium-doped fiber amplifier.

4. Device according to any one of the preceding claims, **characterized in that** the means is an optical modulator (13) that is operated in a region of its nonlinear operating characteristic and is designed to be controllable by a generator (14), wherein the modulator (13) is arranged between the signal laser (11) and the optical waveguide (25).

5. Device according to claim 4, **characterized in that** a generator (14) is coupled to the pump lasers (28, 29) in such a manner that a tuning of the frequency of the high-frequency signal is possible.

6. Device according to any one of claims 3 and 4, **characterized in that** a polarizer (12) is present between the modulator (13) and the signal source, in particular the signal laser (11).

7. Device according to any one of claims 1 through 6, **characterized in that** the optical modulator (13) is designed as a Mach-Zehnder modulator.

8. Device according to any one of claims 1 through 6, **characterized in that** the optical modulator (13) is designed as an electroabsorption modulator.

9. Device according to any one of claims 1 through 3, **characterized in that** the means is the signal source itself, in particular the signal laser (11), which is operated in the nonlinear region of its characteristic and thus generates the necessary sidebands itself.

10. Device according to any one of the preceding claims, **characterized in that** each of the pump lasers (28, 29) has an output signal with a frequency that is higher, by the frequency shift of the Brillouin scattering in the optical waveguide (25) used, than the respective sideband to be amplified, and the pump lasers (28, 29) are dimensioned such that the power of their two pump waves in the optical waveguide (25) results in an amplification of sidebands.

11. Device according to any one of the preceding claims, **characterized in that** the outputs of the two pump lasers (28, 29) are combined through a coupler (27), to the output of which a circulator (26) is connected.

12. Device according to any one of the preceding claims, **characterized in that** a photo element (34), in particular a photodiode, is present which is designed such that a heterodyne superposition of the two amplified sidebands is provided, wherein its output current corresponds to a beat frequency that is produced by the amplified sidebands and that corresponds to an RF frequency.

13. Device according to claim 12, **characterized in that** an antenna (33) or an antenna booster is connected to an output of the photo element (34).

14. Device according to claim 11 and one of claims 12 through 13, **characterized in that** the photo element (34) is connected to an output of the circulator (26).

15. Device according to claim 14, **characterized in that** the circulator (26) is connected to the photo element (34) through an optical transmission fiber (35), preferably a kilometer in length.

16. Device according to any one of the preceding claims, **characterized in that** both the signal laser (11) and the pump lasers (28, 29) have a laser light with a wavelength in the C band of optical telecommunication.

17. Device according to any one of the preceding claims, **characterized in that** the optical waveguide (25) is designed as a glass fiber.

18. Device according to claim 17, **characterized in that** the optical waveguide (25) is designed as a highly nonlinear fiber.

19. Device according to any one of claims 16 through 18, **characterized in that** the optical waveguide (25) is designed as a microstructured fiber.

20. Device according to any one of claims 17 through 19, **characterized in that** the optical waveguide (25) is designed as a standard single-mode glass fiber.

21. Method for generating a high-frequency signal through an optical waveguide (25) for a wireless communication system, in particular with a device (10) according to one of the preceding claims, **characterized by** an injection of a frequency mixture that includes sidebands at one end of the optical waveguide (25), and an injection of two pump waves at the other end of the optical waveguide (25), wherein each of the pump waves amplifies one sideband by a stimulated Brillouin scattering, while the other sidebands are weakened by an optical attenuation in the optical waveguide (25).

22. Method according to claim 21, **characterized by** a heterodyne superposition of the two amplified sidebands.

23. Method according to claim 21 or 22, **characterized by** a modulation, in particular an additional modulation, with payload information, which is impressed on at least one of the sidebands.

24. Method according to claim 23, **characterized in that** the payload information is impressed on the sidebands by modulation of a signal laser (11).

25. Method according to claim 23, **characterized in that** the payload information is impressed on one of the sidebands by modulation of a pump laser (28 or 29).

26. Method according to any one of the preceding claims, **characterized in that** a payload information is impressed on the sidebands by an additional modulation of the generator (14).

## Revendications

1. Dispositif (10) comprenant plusieurs lasers (28, 29), servant à générer et moduler un signal à haute fréquence pour un système de communication sans fil, muni d'un guide d'ondes optiques (25), **caractérisé en ce que**
a) il existe une source de signal générant un signal optique, disposée d'un côté du guide d'ondes optiques (25),
b) il existe au moins un moyen générant dans le guide d'ondes optiques (25) des bandes latérales qui se propagent comme mélange de fréquences,
c) qu'il existe deux lasers de pompe (28, 29) pour l'injection d'un signal sur un côté opposé du guide d'ondes (25), lesquels sont ajustés de façon à amplifier ensemble deux bandes latérales du mélange de fréquences par une diffusion stimulée de Brillouin alors que les autres bandes latérales sont affaiblies par une atténuation dans le guide d'ondes (25).

2. Dispositif selon la revendication 1, **caractérisé en ce que** la source de signal optique se présente sous forme de laser de signalisation (11) générant un signal optique de longueur d'onde constante.

3. Dispositif selon la revendication 1, **caractérisé en ce que** la source de signal optique se présente sous forme d'une source cohérente à large bande, de préférence un laser Fabry-Perot, ou une source non cohérente à large bande, de préférence une photodiode ou un amplificateur à fibre dopé à l'erbium.

4. Dispositif selon l'une des revendications précédentes, **caractérisé en ce que** le moyen est un modulateur optique (13) exploité dans une région de sa caractéristique non linéaire et rendu pilotable grâce à un générateur (14), le modulateur (13) se trouvant entre le laser de signalisation (11) et le guide d'ondes (25).

5. Dispositif selon la revendication 4, **caractérisé en ce qu'**un générateur (14) est couplé avec les lasers de pompe (28, 29) de façon à ce qu'un ajustement de la fréquence du signal à haute fréquence est possible.

6. Dispositif selon l'une des revendications 3 ou 4, **caractérisé en ce qu'**un polarisateur (12) se trouve entre le modulateur (13) et la source du signal, en particulier le laser de signalisation.

7. Dispositif selon l'une des revendications 1 à 6, **caractérisé en ce que** le modulateur optique (13) est un modulateur de type Mach-Zehnder.

8. Dispositif selon l'une des revendications 1 à 6, **caractérisé en ce que** le modulateur optique (13) se présente sous forme d'un modulateur à électro-absorption.

9. Dispositif selon l'une des revendications 1 à 6, **caractérisé en ce que** le moyen est la source de signal proprement dite, en particulier le laser de signalisation (11), laquelle/lequel est amorcé(e) dans la partie non linéaire de sa caractéristique et génère ainsi elle/lui-même les bandes latérales nécessaires.

10. Dispositif selon l'une des revendications précédentes, **caractérisé en ce que** les lasers de pompe (28, 29) possèdent chacun un signal de sortie avec une fréquence qui excède la bande latérale à amplifier du décalage en fréquence de la diffusion de Brillouin dans le guide d'ondes utilisé (25) et **en ce que** les lasers de pompe (28, 29) sont dimensionnés de telle façon que la puissance de leurs deux ondes de pompage dans le guide d'ondes (25) génère une amplification des bandes latérales.

11. Dispositif selon l'une des revendications précédentes, **caractérisé en ce que** les sorties des deux lasers de pompe (28, 29) sont combinées à l'aide d'un coupleur (27) à la sortie duquel un circulateur (26) est connecté.

12. Dispositif selon l'une des revendications précédentes, **caractérisé en ce qu'**il existe un photo-élément (34), en particulier une photo-diode, constitué(e) de telle façon qu'il y ait superposition hétérodyne des deux bandes latérales amplifiées, son courant de sortie suivant une fréquence de battement générée par les bandes latérales amplifiées et correspondant à une radiofréquence.

13. Dispositif selon la revendication 12, **caractérisé en ce qu'**une antenne (33) ou un amplificateur d'antenne est connecté à une sortie du photo-élément (34).

14. Dispositif selon la revendication 11 et selon l'une des revendications 12 ou 13, **caractérisé en ce que** le photo-élément (34) est connecté à une sortie du circulateur (26).

15. Dispositif selon la revendication 14, **caractérisé en ce que** le circulateur (26) est relié au photo-élément (34) par une fibre optique de transmission (35), de préférence longue de plusieurs kilomètres.

16. Dispositif selon l'une des revendications précédentes, **caractérisé en ce que** tant le laser de signalisation (11) que les lasers de pompe (28, 29) présentent une lumière laser d'une longueur d'onde dans la bande C des télécommunications optiques.

17. Dispositif selon l'une des revendications précédentes, **caractérisé en ce que** le guide d'ondes (25) se présente sous forme de fibre optique.

18. Dispositif selon la revendication 17, **caractérisé en ce que** le guide d'ondes (25) se présente sous forme de fibre à coefficient non linéaire élevé.

19. Dispositif selon l'une des revendications 16 à 18, **caractérisé en ce que** le guide d'ondes (25) se présente sous forme de fibre microstructurée.

20. Dispositif selon l'une des revendications 17 à 19, **caractérisé en ce que** le guide d'ondes (25) est une fibre optique monomode standard.

21. Procédé de génération d'un signal haute fréquence par un guide d'ondes optiques (25) pour un système de communication sans fil, en particulier doté d'un dispositif (10) selon l'une des revendications précédentes, **caractérisé en** une injection d'un mélange de fréquences comprenant des bandes latérales à une extrémité du guide d'ondes (25) et par une injection de deux ondes de pompage à l'autre extrémité du guide d'ondes (25), chacune des ondes de pompage amplifiant une bande latérale par diffusion stimulée de Brillouin, alors que les autres bandes latérales sont affaiblies par une atténuation optique dans le guide d'ondes (25).

22. Procédé selon la revendication 21, **caractérisé par** une superposition hétérodyne des deux bandes latérales amplifiées.

23. Procédé selon l'une des revendications 21 ou 22, **caractérisé par** une modulation, en particulier additionnelle, avec une information utile qui est imprimée à au moins une des bandes latérales.

24. Procédé selon la revendication 23, **caractérisé en ce que** l'information utile est imprimée aux bandes latérales par une modulation d'un laser de signalisation (11).

25. Procédé selon la revendication 23, **caractérisé en ce que** l'information utile est imprimée à l'une des bandes latérales par une modulation d'un laser de pompe (28 ou 29).

26. Procédé selon l'une des revendications précédentes, **caractérisé en ce qu'**une information utile est imprimée aux bandes latérales par une modulation additionnelle du générateur (14).
